# FASCICULE DE BREVET EUROPEEN

(11) **EP 0 369 873 B1**
(45) Date de publication et mention de la délivrance du brevet: **24.03.1993**
(21) Numéro de dépôt: 89403124.4
(22) Date de dépôt: 14.11.1989
(51) Int. Cl.: B60R 1/06

(54) **Rétroviseur effaçable autoverrouillé en position parking et en position d'utilisation avec rappel anti-pincement**
Abklappbaren Rückblickspiegel mit Selbstverriegelung in Park- und Gebrauchsstellung und Vermeidung des Einklemmens bei Rückstellung
Foldable rearview mirror self-locked in parked and driving positions with an antipinch return

(30) Priorité: 16.11.1988 FR 8814898
(43) Date de publication de la demande: 23.05.1990
(73) Titulaire: SOCIETE MANZONI-BOUCHOT, F-39200 Saint-Claude (FR)
(72) Inventeur: Manzoni, Bernard Antoine Jean, F-39200 Saint-Claude (FR)
(74) Mandataire: Caunet, Jean

(56) Documents cités:
- EP-A- 0 340 944
- DE-A- 3 017 228
- PATENT ABSTRACTS OF JAPAN vol. 10, no. 286 (M-521)(2342) 27 septembre 1986, & JP-A-61 105248 (ICHIKOH IND LTD) 23 mai 1986,
- PATENT ABSTRACTS OF JAPAN vol. 10, no. 146 (M-482)(2203) 28 mai 1986, & JP-A-61 1551 (HONDA GIKEN KOGYO K.K.) 07 janvier 1986,
- PATENT ABSTRACTS OF JAPAN vol. 7, no. 271 (M-260)(1416) 03 décembre 1983, & JP-A-58 149836 (ICHIKOH KOGYO K.K.) 06 septembre 1983,
- PATENT ABSTRACTS OF JAPAN vol. 9, no. 311 (M-436)(2034) 07 décembre 1985, & JP-A-60 146743 (ICHIKOH KOGYO K.K.) 02 août 1985,

## Description

La présente invention concerne un rétroviseur effaçable du type comprenant une embase destinée à être fixée sur le véhicule, un boîtier porte-miroir appliqué en position d'utilisation contre l'embase par l'intermédiaire de deux organes de pivotement distants l'un de l'autre dans la direction antéro-postérieure, un ressort tendant à maintenir le contact entre le boîtier et l'embase, ainsi qu'un miroir disposé dans le boîtier et mobile relativement à celui-ci sous l'action d'un dispositif de commande (voir par example le document JP-A-61-1551).

Cette invention a pour but :
- de permettre au boîtier de s'effacer vers l'avant sous l'effet d'un choc arrière et de revenir automatiquement en position d'utilisation,
- de permettre au boîtier de s'effacer vers l'arrière sous l'effet d'un choc avant et de revenir automatiquement en position d'utilisation,
- de permettre au boîtier de se placer et de se verrouiller en position parking dans laquelle il est rabattu vers l'arrière près du véhicule,
- de permettre au boîtier de revenir automatiquement lorsqu'il est libéré de la position parking, vers la position d'utilisation et cela en douceur c'est-à-dire sans risque de pincement des doigts lorsqu'il se verrouille en position d'utilisation.

Pour atteindre ce but et conformément à l'invention, le rétroviseur comporte également une pièce basculante antéro-postérieure disposée près de l'embase dans le boîtier, articulée au moyen d'organes de pivotement permanent à l'avant relativement à ce boîtier et à l'arrière relativement à cette embase et attelée entre lesdits organes au boîtier par un ressort de rappel, ledit boîtier étant en outre relié à ladite embase à l'avant par un organe de pivotement escamotable et à l'arrière par un organe de pivotement glissant situé plus près de l'embase que l'organe de pivotement postérieur de la pièce basculante et plus à l'arrière que celui-ci de façon que lors du pivotement du boîtier de l'avant vers l'arrière, ladite pièce pivote relativement à celui-ci en s'éloignant du point d'accrochage du ressort de rappel dans le boîtier et bande davantage ce ressort, un organe de verrouillage à rappel élastique étant par ailleurs monté sur la pièce basculante et coopérant sélectivement avec deux crans de l'embase définissant la position d'utilisation et la position parking du boîtier.

Suivant une forme de réalisation particulièrement avantageuse, l'organe de pivotement permanent antérieur et l'organe de pivotement escamotable antérieur de la pièce basculante sont coaxiaux ; de préférence, l'organe de pivotement permanent antérieur est un axe traversant un manchon et une chape faisant corps indifféremment avec la pièce basculante et le boîtier, cet axe faisant saillie en regard d'au moins un demi-palier de l'embase afin de constituer l'organe de pivotement escamotable.

L'organe de pivotement permament postérieur est un axe traversant un manchon et une chape faisant corps indifféremment avec la pièce basculante et l'embase.

L'organe postérieur de pivotement glissant est constitué par une partie du bord du boîtier appuyé par le ressort de rappel contre une rampe de l'embase faisant saillie vers l'extérieur.

L'organe de verrouillage précité est un levier monté pivotant sur la pièce basculante et présentant en saillie une dent susceptible de coopérer sélectivement avec deux crans d'une came faisant corps avec l'embase.

La came présente une partie arquée concentrique à l'organe de pivotement postérieur de la pièce basculante, cette partie arquée étant reliée au cran de verrouillage en position d'utilisation par une rampe à rayon croissant.

Un arrêtoir faisant corps avec l'embase est susceptible de coopérer avec une butée de la pièce basculante pour définir la position parking du boîtier.

les caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin :
- la figure 1 est une vue de dessus montrant le rétroviseur conforme à l'invention,
- la figure 2 est une coupe longitudinale illustrant les moyens de liaison du boîtier avec l'embase dans la position d'utilisation,
- la figure 3 est une vue analogue à la figure 2 pour la position d'effacement vers l'avant,
- la figure 4 est une vue analogue à la figure 2 pour la position parking correspondant à l'effacement maximal vers l'arrière,
- la figure 5 est une vue schématique faisant ressortir pour les figures 2 et 4 la déformation des moyens de liaison précités,
- la figure 6 est une vue de côté prise suivant la ligne VI-VI de la figure 2.

Le rétroviseur comporte une embase 1 en matière injectée (thermoplastique ou non ferreux) destinée à être appliquée sur la carrosserie ou une portière d'un véhicule automobile et à y être fixée par tout moyen approprié. L'embase présente une tubulure 2 faisant saillie vers l'extérieur et fermée par un fond 3.

Le rétroviseur comporte également un boîtier effaçable 4 en matière plastique moulée, rapporté et fixé sur une carcasse 5 en matière injectée (thermoplastique ou non ferreux). Le boîtier 4 présente un manchon tubulaire 6 prolongeant la tubulure 2 de l'embase 1. Ce boîtier 4 délimite une fenêtre postérieure 7 dans laquelle s'étend un miroir mobile 8 supporté, par l'intermédiaire d'un dispositif d'orientation 9, par la carcasse 5. Le dispositif d'orientation 9 comporte deux axes de pivotement droite-gauche et ciel-terre respectivement ; il est en outre relié à une manette d'actionnement sélectif, non représentée, par une transmission qui est du type à câbles, mais qui peut aussi être du type électrique ou autre.

Une pièce basculante antéro-postérieure 10 est interposée entre l'embase 1 et le boîtier 4. Elle s'étend dans le manchon 6 de ce boîtier de façon sensiblement parallèle au fond 3 de la tubulure 2 de cette embase lorsque le rétroviseur est en position d'utilisation.

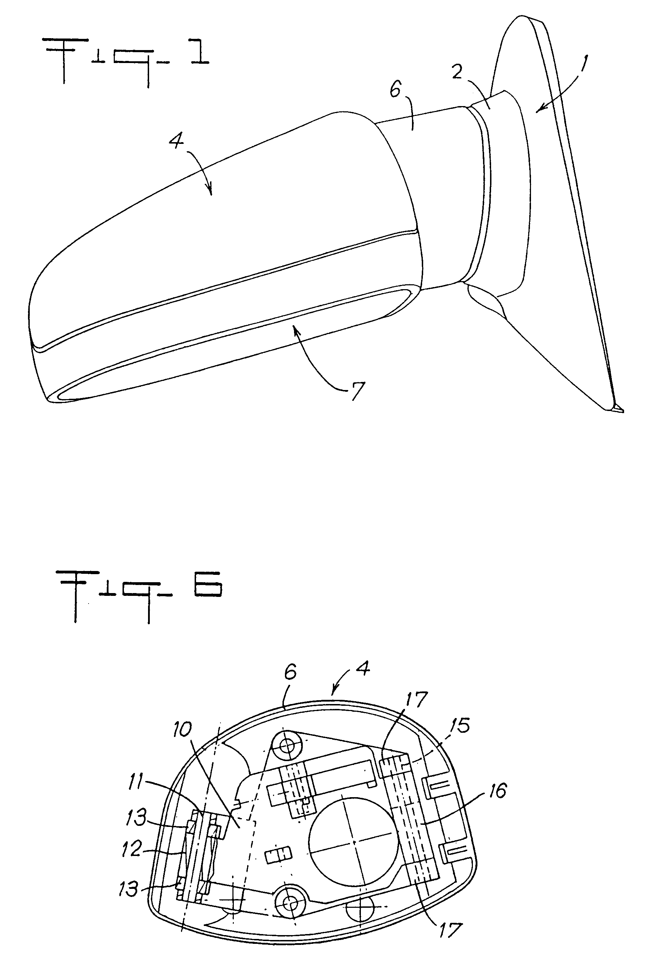

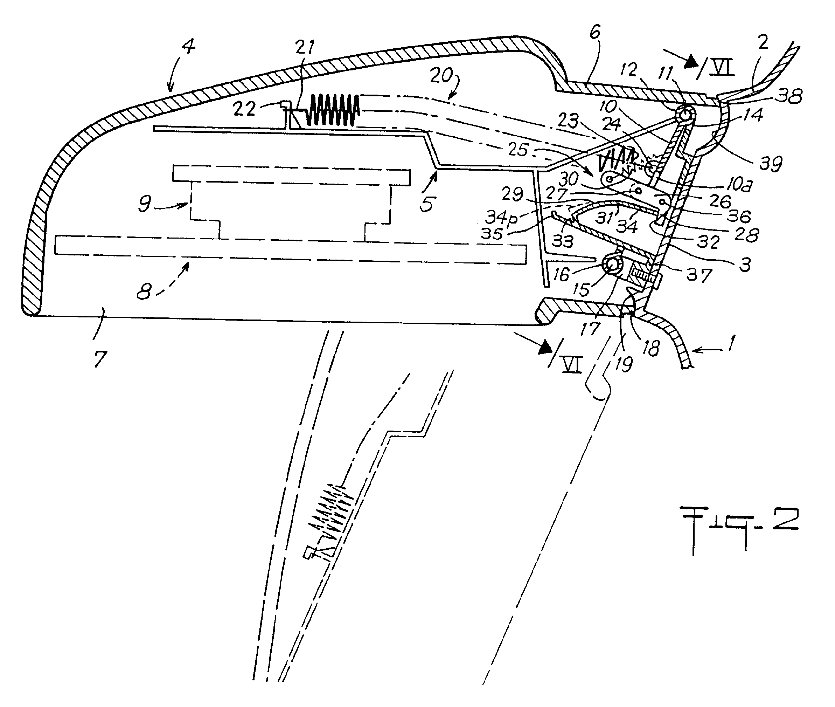

Comme le montre la figure 2 :
- la pièce basculante 10 est montée pivotante à l'avant de façon permanente relativement au boîtier 4,
- la pièce basculante 10 est montée pivotante à l'avant de façon escamotable relativement à l'embase 1,
- la pièce basculante 10 est montée pivotante à l'arrière de façon permanente relativement à l'embase 1.
- le boîtier 4 est monté pivotant à l'arrière de façon glissante relativement à l'embase 1.

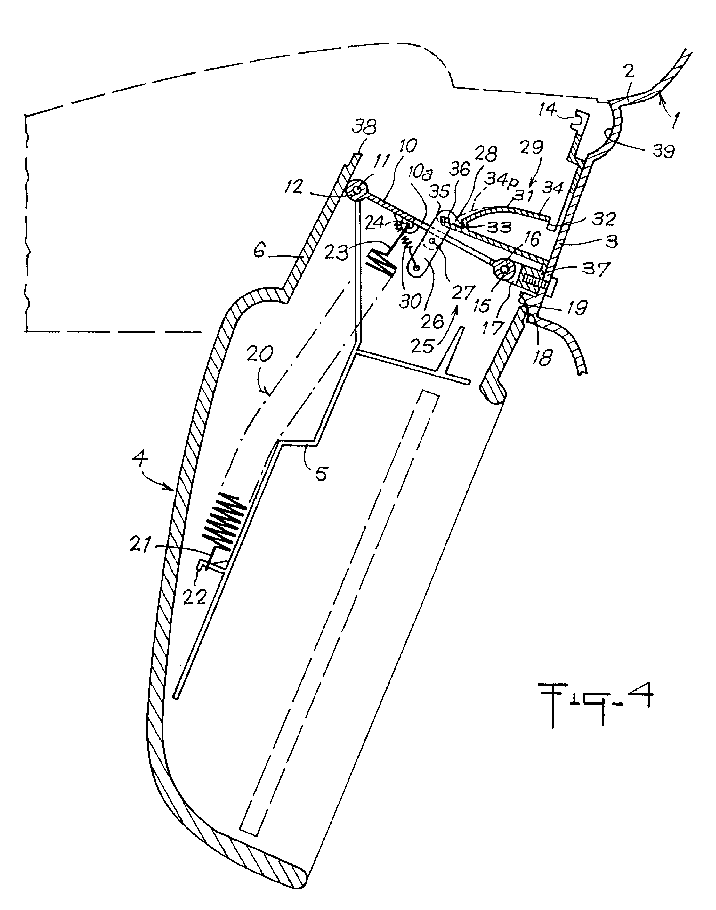

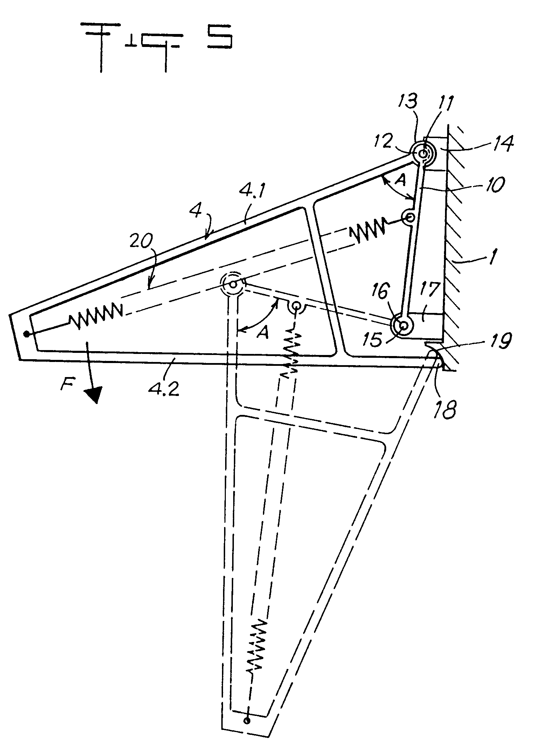

Dans l'exemple représenté et ainsi que cela ressort clairement des figures 2 et 6, le pivotement permanent antérieur du boîtier 4 relativement à la pièce 10 est réalisé au moyen d'un axe d'articulation 11 traversant un manchon 12 de la pièce 10 et une chape 13 de la carcasse 5 du boîtier, chape dont les branches s'emboîtent sur le manchon et s'ajustent avec un jeu minimal sur les extrémités de celui-ci. Bien entendu, le manchon peut faire corps avec la carcasse et la chape avec la pièce basculante.

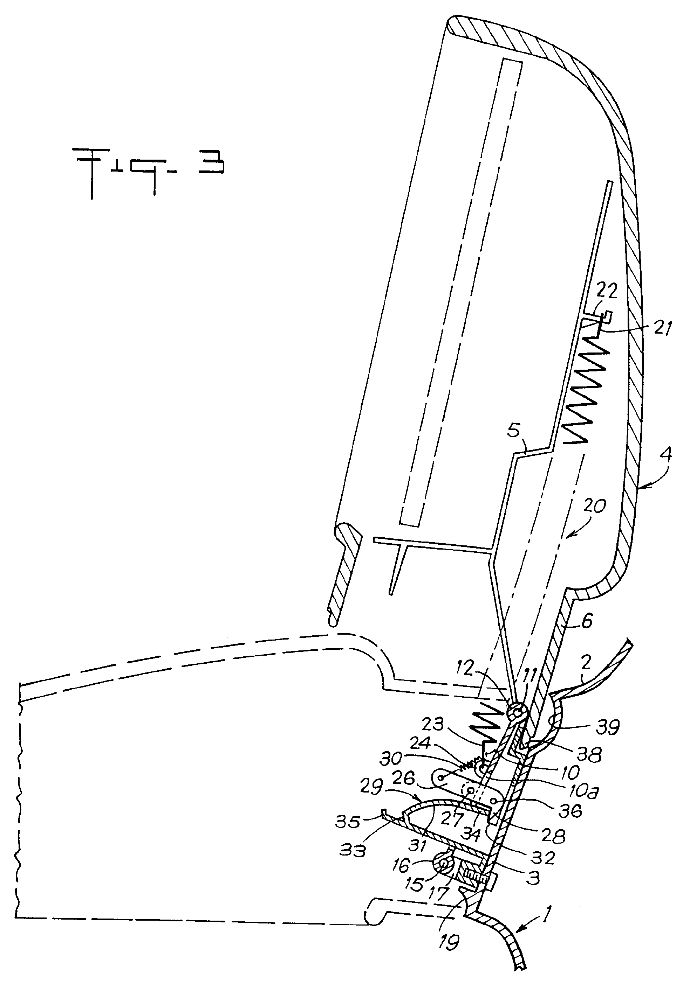

Dans ce même exemple et ainsi que cela ressort des figures 4 et 6, l'axe 11 précité fait saillie des branches de la chape 13 et ses extrémités sont susceptibles de s'emboîter dans des demi-paliers 14 faisant corps avec le fond 3 de l'embase 1. Les demi-paliers 14 s'ajustent avec un jeu minimal sur les branches de la chape. Bien entendu, les demi-paliers 14 peuvent être formés sur les branches de la chape 13 pour coopérer avec des tourillons faisant corps avec l'embase 1. Quelle que soit la réalisation choisie, l'organe de pivotement ainsi obtenu est déboîtable, ce qui permet le pivotement du boîtier vers l'arrière (figure 4) comme cela est expliqué dans ce qui suit. Mais lorsque cet organe de pivotement est réemboîté (figure 2), le pivotement du boîtier vers l'avant (figure 3) est réalisable par son intermédiaire sans difficulté étant donné que les modes de pivotement boîtier 4 sur pièce 10 et boîtier 4 sur embase 1 sont coaxiaux. Lors du pivotement vers l'avant, le bord antérieur 38 du boîtier décrit une trajectoire circulaire centrée sur l'axe 11 et très proche de la paroi d'un dégagement cylindrique 39 de l'embase 1.

Dans l'exemple précité et ainsi que cela ressort des figures 2, 4 et 6, le pivotement permanent postérieur de la pièce basculante 10 relativement à l'embase 1 est réalisé au moyen d'un axe 15 traversant un manchon 16 de la pièce 10 et une chape 17 faisant corps avec le fond 3 de l'embase 1. Comme pour l'axe antérieur, les branches de la chape s'emboîtent sur le manchon et s'ajustent avec un jeu minimal sur les extrémités de celui-ci.

Dans ledit exemple et ainsi que cela ressort des figures 2 et 4, le pivotement glissant postérieur du boîtier 4 relativement à l'embase 1 est réalisé par une partie 18 du bord arrière du boîtier maintenue en contact permanent avec une rampe incurvée 19 faisant saillie vers l'extérieur sur le fond 3 de l'embase 1.

Comme le montre la figure 6, les axes 11 et 15 sont convergents pour respecter les normes d'effacement.

Outre les moyens cinématiques décrits dans ce qui précède, le rétroviseur comporte :
- d'une part, un organe élastique de rappel 20, tel qu'un ressort hélicoïdal de traction dont une extrémité 21 est accrochée sur une patte 22 de la carcasse 5 du boîtier 4 et dont l'autre extrémité 23 est accrochée sur un anneau 24 de la pièce basculante 10,
- d'autre part, un dispositif de verrouillage 25 à rappel élastique permettant d'immobiliser le boîtier 4 relativement à l'embase 1 dans la position d'utilisation (figure 2), la position parking (figure 4) et la position d'effacement avant (figure 3), ce dispositif de verrouillage maintenant en outre le contact pendant les pivotements avant et arrière.

Dans l'exemple représenté, le dispositif de verrouillage 25 comporte un levier 26 traversant une ouverture 10a de la pièce basculante 10 sur laquelle ledit levier est monté pivotant dans sa partie médiane autour d'un axe 27. A son extrémité située du côté de l'embase 2, le levier 26 présente en saillie une dent 28 orientée vers une came 29 et à son extrémité opposée située de l'autre côté, le levier 26 est relié à la pièce 10 par un ressort 30 tendant à appliquer la dent contre la came.

Dans cet exemple, la came 29 qui traverse également l'ouverture 10a de la pièce basculante 10, présente une partie arquée 31 et des crans extrêmes de verrouillage 32 et 33. La partie 31 est arquée concentriquement à l'axe 15 et reliée par une rampe 34 à rayon croissant au cran 32 de verrouillage en position d'utilisation (figure 2). La partie 31 peut aussi être reliée par une rampe 34p à rayon croissant au cran 33 de verrouillage en position parking (figure 4).

Cette position parking est définie par un arrêtoir fixe 35 susceptible de coopérer avec une butée mobile 36 se déplaçant avec la pièce basculante 10. Dans l'exemple représenté, l'arrêtoir 35 est une patte de la came 29 et la butée 36 est un doigt faisant saillie latéralement sur le levier 26 près de la dent 28.

Avantageusement, une armature 37 est rapportée et fixée sur le fond 3 de l'embase 1. Comme la pièce basculante 10, elle est constituée par une matière thermoplastique ou non ferreux injectée ou par un alliage métallique moulé ou estampé, ces matériaux étant rigides et résistants. Cette armature présente en saillie les demi-paliers antérieurs 14, la came 25 et la chape postérieure 17.

Pour bien comprendre le fonctionnement de la cinématique ainsi réalisée, on peut se référer à la figure 5 sur laquelle on retrouve le boîtier 4 schématisé sous forme d'un compas rigide. La pièce 10 est articulée sur la branche antérieure 4.1 de ce compas par l'intermédiaire de l'axe 11 qui repose sur les demi-paliers 14 de l'embase 1, la pièce 10 formant avec la branche 4.1 un angle A en position d'utilisation représentée en trait plein. La pièce 10 est articulée à l'arrière sur l'embase 1 par l'intermédiaire de l'axe 15. La branche postérieure 4.2 dudit compas schématisant le boîtier est articulée de façon glissante par son extrémité 18 sur la rampe 19 de l'embase 1. Le ressort 20 reliant le sommet du compas à la pièce 20 tend à réduire l'angle A. Le levier 26 et la came 29 non représentés sur la figure 5, permettent d'immobiliser la pièce 10 relativement à l'embase dans les positions d'utilisation (figure 2), d'effacement antérieur (figure 3) et d'effacement postérieur ou de parking (figure 4).

Lors du pivotement du boîtier 4 vers l'arrière dans le sens de la flèche F, l'axe 11 du compas quitte les demi-paliers 14 de l'embase ; la pièce 10 pivote autour de l'axe fixe 15 de cette embase, tandis que la branche postérieure 4.2 du compas ou boîtier 4 pivote par son extrémité 18 sur la rampe 19 de ladite embase en glissant. Ce glissement résulte du fait que le triangle 11, 15, 18 doit être déformable (comparer ledit triangle sur la représentation en trait plein de la figure 5 concernant la position d'utilisation avec ledit triangle sur la représentation en trait interrompu de la figure 5 concernant la position parking) pour que l'angle A formé par la pièce 10 et la branche 4.1 croisse lors du pivotement vers l'arrière dans le sens de la flèche F et qu'ainsi le ressort 20 s'allonge davantage (comparer les angles A et les longueurs du ressort 20 pour les deux positions illustrées par la figure 5).

Dans ces conditions, l'effacement vers l'arrière (flèche F) du rétroviseur s'accompagne d'une surtension du ressort 20, ayant tendance à rappeler le rétroviseur vers la position d'utilisation.

En réalité des effets antagonistes apparaissent. Il s'agit du frottement de la dent 28 sur la came 29, du frottement du bord 18 du boîtier 4 sur la rampe 19 de l'embase 1 et de la résistance opposée lors du franchissement de l'alignement type genouillère des points 11, 15 et 18. Ces effets antagonistes permettent, si le ressort 20 est très puissant, d'atténuer le rappel élastique qu'il engendre ou s'il est moins puissant, d'assister l'opérateur qui commande à la main le retour du rétroviseur vers la position d'utilisation. Dans tous les cas, le pivotement de retour est amorti au point qu'il est impossible de se coincer les doigts entre le boîtier et l'embase, ce qui constitue une sécurité notamment pour les jeunes qui sont tentés de dégager les rétroviseurs de la position parking.

Comme cela est indiqué dans ce qui précède, le rétroviseur est verrouillé de façon élastique par la dent 28 pénétrant dans le cran 32 pour la position d'utilisation et dans le cran 33 pour la position parking. Le déverrouillage s'effectue automatiquement en intervenant sur le boîtier 4 à la main ou par choc pour le faire pivoter. A cet effet, la dent 28 est en V et ses flancs s'étendent de façon sensiblement symétrique par rapport au rayon de l'axe 15 aboutissant sur ladite dent. Ainsi, les flancs sont faiblement dégageants lors du pivotement de la pièce 10 autour de l'axe 15 et provoquent par réaction contre ceux des crans 32, 33 le pivotement de déverrouillage du levier 26 contre l'action du ressort 30. Pour bander davantage ce ressort lorsqu'il s'agit de verrouiller en position d'utilisation (figure 2), la dent 28 doit franchir, avant de parvenir au cran 32, la rampe 34 à rayon croissant de la came 29. De la même façon, pour bander davantage le ressort 30 lorsqu'il s'agit de verrouiller en position parking (figure 4), la dent 28 peut franchir, avant de parvenir au cran 33, la rampe éventuelle 34p à rayon croissant de la came 29.

Par ailleurs, il y a avantage à s'opposer à tout dépassement de la position parking (figure 4), par butée du doigt 36 du levier 26 contre la patte-arrêtoir 35 de la came 29. Bien entendu, la butée et l'arrêtoir peuvent être situés ailleurs, par exemple sur la chape 17 et la pièce 10.

## Revendications

1. Rétroviseur effaçable autoverrouillé en position parking et en position d'utilisation avec rappel anti-pincement, comprenant une embase (1) destinée à être fixée sur le véhicule, un boîtier (4) porte-miroir appliqué en position d'utilisation contre l'embase par l'intermédiaire de deux organes de pivotement distants l'un de l'autre dans la direction antéro-postérieure, un ressort (20) tendant à maintenir le contact entre le boîtier et l'embase, ainsi qu'un miroir (8) disposé dans le boîtier et mobile relativement à celui-ci sous l'action d'un dispositif de commande (9),
caractérisé en ce qu'il comporte également une pièce basculante (10) antéro-postérieure disposée près de l'embase (1) dans le boîtier (4), articulée au moyen d'organes de pivotement permanent à l'avant (11, 13) relativement à ce boîtier et à l'arrière (15 à 17) relativement à cette embase et attelée entre lesdits organes au boîtier par un ressort de rappel (20), ledit boîtier (4) étant en outre relié à ladite embase (1) à l'avant par un organe de pivotement escamotable (11, 14) et à l'arrière par un organe de pivotement glissant (18, 19) situé plus près de l'embase que l'organe de pivotement postérieur de la pièce basculante et plus à l'arrière que celui-ci de façon que lors du pivotement du boîtier de l'avant vers l'arrière, ladite pièce (10) pivote relativement à celui-ci en s'éloignant du point d'accrochage du ressort de rappel (20) dans le boîtier et bande davantage ce ressort, un organe de verrouillage (26) à rappel élastique (27) étant par ailleurs monté sur la pièce basculante (10) et coopérant sélectivement avec deux crans (32, 33) de l'embase (1) définissant la position d'utilisation et la position parking du boîtier.

2. Rétroviseur selon la revendication 1, caractérisé en ce que l'organe de pivotement permanent antérieur (11 à 13) et l'organe de pivotement escamotable antérieur (11, 14) de la pièce basculante sont coaxiaux.

3. Rétroviseur selon la revendication 2, caractérisé en ce que l'organe de pivotement permanent antérieur est un axe (11) traversant un manchon (12) et une chape (13) faisant corps indifféremment avec la pièce basculante (10) et le boîtier (4), cet axe (11) faisant saillie en regard d'au moins un demi-palier (14) de l'embase (1) afin de constituer l'organe de pivotement escamotable.

4. Rétroviseur selon la revendication 1, caractérisé en ce que l'organe de pivotement permanent postérieur est un axe (15) traversant un manchon (16) et une chape (17) faisant corps indifféremment avec la pièce basculante (10) et l'embase (1).

5. Rétroviseur selon la revendication 1, caractérisé en ce que l'organe postérieur de pivotement glissant est constitué par une partie (18) du bord du boîtier (4) appuyé par le ressort de rappel (20) contre une rampe (19) de l'embase faisant saillie vers l'extérieur.

6. Rétroviseur selon la revendication 1, caractérisé en ce que l'organe de verrouillage précité est un levier (26) monté pivotant sur la pièce basculante (10) et présentant en saillie une dent (28) susceptible de coopérer sélectivement avec deux crans (32, 33) d'une came (29) faisant corps avec l'embase (1).

7. Rétroviseur selon la revendication 6, caractérisé en ce que la came (29) présente une partie arquée (31) concentrique à l'organe de pivotement postérieur (15 à 17) de la pièce basculante (10), cette partie arquée étant reliée au cran de verrouillage (32) en position d'utilisation par une rampe à rayon croissant (34).

8. Rétroviseur selon la revendication 7, caractérisé en ce que la partie arquée (31) de la came (29) est également reliée au cran de verrouillage (33) en position parking par une rampe à rayon croissant (34p).

9. Rétroviseur selon la revendication 6, caractérisé en ce que la dent (28) du levier de verrouillage (26) est conformée en V orienté de façon que ses deux flancs soient faiblement dégageants lors du pivotement dans les deux sens de la pièce basculante (10) autour de son axe postérieur de pivotement (15).

10. Rétroviseur selon la revendication 6, caractérisé en ce qu'un arrêtoir faisant corps avec l'embase (1) est susceptible de coopérer avec une butée de la pièce basculante (10) pour définir la position parking du boîtier (14).

11. Rétroviseur selon la revendication 10, caractérisé en ce que la butée est un doigt (36) faisant saillie latéralement sur le levier de verrouillage (26) près de la dent (28) et l'arrêtoir est une patte (35) de la came (29) faisant saillie près du cran de verrouillage (33) en position parking.

12. Rétroviseur selon les revendications 4 et 6, caractérisé en ce que le ou les demi-paliers antérieurs de pivotement (14), la came de verrouillage (29) et la partie fixe (17) de l'organe de pivotement postérieur de la pièce basculante (10) font corps avec une armature (37) rapportée et fixée sur l'embase (1), la came (29) et le levier de verrouillage (26) traversant une ouverture (10a) de ladite pièce basculante (10).

## Patentansprüche

1. Wegklappbarer Rückspiegel, welcher sowohl in einer Parkposition wie auch in seiner Benutzungsposition unter Einsatz einer klemmfreien Rückführung selbstverriegelbar ist, bestehend aus einer an dem Kraftfahrzeug befestigbaren Fußplatte (1), einem der Halterung eines Spiegels dienenden Gehäuse (4), welches mittels zweier in der Vorwärts- und Rückwärtsrichtung im Abstand angeordnete Schwenkorgane in der Benutzungsposition gegen die Fußplatte gedrückt ist, einer das Gehäuse in Richtung der Fußplatte drückenden Feder (20), sowie einem innerhalb des Gehäuses angeordneten Spiegel (8), welcher unter Einsatz eines Verstellmechanismus (9) relativ zum Gehäuse bewegbar ist, **dadurch gekennzeichnet**, daß derselbe innerhalb des Gehäuses (4) im Bereich der Fußplatte (1) zusätzlich eine nach hinten und vorne schwenkbare Schwenkplatte (10) aufweist, welche unter Einsatz von vorderen Schwenkgliedern (11, 13) in Bezug auf das Gehäuse und mit Hilfe von hinteren Schwenkgliedern (15 - 17) in Bezug auf die Fußplatte gehalten ist und an welcher zwischen diesen Schwenkgliedern die an dem Gehäuse eingehängte Rückholfeder (20) zum Eingreifen gelangt, ferner daß das Gehäuse (4) zusätzlich im vorderen Bereich mittels eines abhebbaren Gelenkes (11, 14) an der Fußplatte (1) angelenkt ist, während nach hinten hin ein verschiebbares Gelenk (18, 19) vorgesehen ist, welches näher an der Fußplatte, jedoch noch weiter nach rückwärts versetzt als die hinteren Schwenkglieder der Schwenkplatte zu liegen gelangt, so daß bei einer Verschwenkung des Gehäuses von vorne nach rückwärts die Schwenkplatte (10) relativ zum Gehäuse verschwenkt ist, wobei der Anlenkpunkt der innerhalb des Gehäuses vorhandenen Rückholfeder (20) sich entfernt und die Rückholfeder noch weiter gedehnt wird, und daß auf der Schwenkplatte (10) zusätzlich ein Verriegelungselement (26) mit einer elastischen Rückführung (27) befestigt ist, welche zur Festlegung der Benutzungsposition und der Parkposition des Gehäuses selektiv mit zwei Einkerbungen (32, 33) der Fußplatte (1) in Eingriff gelangt.

2. Rückspiegel nach Anspruch 1, dadurch **gekennzeichnet**, daß die vorderen Schwenkglieder (11-13) und das abhebbare Gelenk (11, 14) der Schwenkplatte (10) koaxial zueinander angeordnet sind.

3. Rückspiegel nach Anspruch 2, dadurch **gekennzeichnet,** daß die vorderen Schwenkglieder einen Stift (11) aufweisen, welcher durch eine Buchse (12) und ein Gabelgelenk (13) der Schwenkplatte (10) bzw. des Gehäuses (4) hindurchgeführt ist, und daß dieser Stift (11) auf einem Halblager (14) der Fußplatte (11) zum Aufliegen gelangt, um auf diese Weise das abhebbare Gelenk zu bilden.

4. Rückspiegel nach Anspruch 1, dadurch **gekennzeichnet**, daß die rückwärtigen Schwenkglieder einen Stift (15) aufweisen, welcher durch eine Buchse (16) und ein Gabellager (17) der Schwenkplatte (10) bzw. der Fußplatte (1) hindurchgeführt ist.

5. Rückspiegel nach Anspruch 1, dadurch **gekennzeichnet**, daß das rückwärtige verschiebbare Gelenk einen am Rand des Gehäuses (4) vorgesehenen Teil (18) aufweist, welcher unter dem Einfluß der Rückholfeder (20) gegen einen nach außen hin vorstehenden Schrägansatz (19) der Fußplatte (1) zum Anliegen gelangt.

6. Rückspiegel nach Anspruch 1, dadurch **gekennzeichnet**, daß das Verriegelungselement ein Hebel (26) ist, welcher auf der Schwenkplatte (10) schwenkbar gelagert ist und welcher einen vorspringenden Zahn (28) aufweist, der wahlweise mit einer der beiden Einkerbungen (32, 33) eines Teil der Fußplatte (1) bildenden Nockenelements (29) in Eingriff gelangt.

7. Rückspiegel nach Anspruch 6, dadurch **gekennzeichnet**, daß das Nockenelement (29) einen bogenförmigen Ansatz (31) aufweist, welcher konzentrisch zu den rückwärtigen Schwenkgliedern (15-17) der Schwenkplatte (10) verläuft, und daß dieser bogenförmige Ansatz über eine Schrägfläche (34) mit zunehmenden Krümmungsradius in die der Festlegung der Benutzungsposition dienende Einkerbung (32) übergeht.

8. Rückspiegel nach Anspruch 7, dadurch **gekennzeichnet**, daß der bogenförmige Ansatz (31) des Nockenelements (29) ebenfalls über eine Schrägfläche (34 p) mit zunehmenden Krümmungsradius in die der Festlegung der Parkposition dienende Einkerbung (33) übergeht.

9. Rückspiegel nach Anspruch 6, dadurch **gekennzeichnet**, daß der an dem Verriegelungshebel (26) vorgesehene Zahn (28) V-förmig ausgebildet ist, so daß seine zwei Flanken beim Schwenken in den zwei Richtungen der Schwenkplatte (10) um die hintere Schwenkachse (15) geringfügig auseinanderführen.

10. Rückspiegel nach Anspruch 6, dadurch **gekennzeichnet**, daß die Fußplatte (1) mit einem Anschlag versehen ist, welcher zur Festlegung der Parkposition des Gehäuses (4) mit einem entsprechenden Anschlag der Schwenkplatte (10) in Eingriff gelangt.

11. Rückspiegel nach Anspruch 10, dadurch **gekennzeichnet**, daß der Anschlag der Schwenkplatte (10) ein Ansatz (36) ist, welcher im Bereich des Zahnes (28) seitlich von dem Verriegelungshebel (26) vorspringt, und daß der Anschlag der Fußplatte eine Lasche (35) des Nockenelements (29) ist, welche in der Parkposition sich in der Nähe der Einkerbung (33) befindet.

12. Rückspiegel nach den Ansprüchen 4 und 6, dadurch **gekennzeichnet**, daß der bzw. die vorderen Halblager (14) des Nockenelements (29) und der starre Teil (17) der hinteren Schwenkglieder der Schwenkplatte (10) Teil eines Tragelementes (37) sind, welches an der Fußplatte (1) befestigt ist, und daß die Schwenkplatte (10) mit einer Öffnung (10a) versehen ist, durch welche das Nockenelement (29) und der Verriegelungshebel (10) hindurchgeführt sind.

## Claims

1. Retractable rearview mirror self-locked in position for parking and in position of use with return without risk of pinching the fingers, comprising a base (1) adapted to be fixed on the vehicle, a mirror-holder casing (4) applied, in position of use, against the base via two pivoting members distant from each other in the front-to-rear direction, a spring (20) tending to maintain contact between the casing and the base, as well as a mirror (8) disposed in the casing and mobile relatively thereto under the action of a control device (9),
characterized in that it also comprises a front-to-rear tilting piece (10) disposed near the base (1) in the casing (4), articulated by means of a member for permanent forward pivoting (11, 13) relatively to said casing and a member for permanent rearward pivoting (15 to 17) relatively to said base and coupled between said members to the casing by a return spring (20), said casing (4) further being connected to said base (1) at the front by a retractable pivoting member (11, 14) and at the rear by a sliding pivoting member (18, 19) located nearer the base than the rear pivoting member of the tilting piece and more to the rear than said rear pivoting member, so that, when the casing pivots from front to rear, said piece (10) pivots relatively thereto, moving away from the point of attachment of the return spring (20) in the casing and stretches this spring more, a locking member (26) with elastic return (27) being furthermore mounted on the tilting piece (10) and cooperating selectively with two notches (32, 33) in the base (1) defining the position of use of the casing and the position for parking.

2. Rearview mirror according to claim 1, characterized in that the permanent forward pivoting member (11, 13) and the retractable forward pivoting member (11, 14) of the tilting piece are coaxial.

3. Rearview mirror according to claim 2, characterized in that the permanent forward pivoting member is a shaft (11) passing through a sleeve (12) and a fork joint (13) integral equally well with the tilting piece (10) and the casing (4), this shaft (11) projecting opposite at least one half-bearing (14) of the base (1) in order to constitute the retractable pivoting member.

4. Rearview mirror according to claim 1, characterized in that the permanent rearward pivoting member is a shaft (15) passing through a sleeve (16) and a fork joint (17) integral equally well with the tilting piece (10) and the base (1).

5. Rearview mirror according to claim 1, characterized in that the rearward sliding pivoting member is constituted by a part (18) of the edge of the casing (4) abutting by the return spring (20) against a ramp (19) of the base projecting outwardly.

6. Rearview mirror according to claim 1, characterized in that said locking member is a lever (26) mounted to pivot on the tilting piece (10) and presenting a projecting tooth (28) capable of cooperating selectively with two notches (32, 33) of a cam (29) forming part of the base (1).

7. Rearview mirror according to claim 6, characterized in that the cam (29) presents an arcuate part (31) concentric to the rearward pivoting member (15 to 17) of the tilting piece (10), this arcuate part being connected to the locking notch (32) in position of use by a ramp with increasing radius (34).

8. Rearview mirror according to claim 7, characterized in that the arcuate part (31) of the cam (29) is also connected to the notch (33) for locking in parking position by a ramp with increasing radius (34p).

9. Rearview mirror according to claim 6, characterized in that the tooth (28) of the locking lever (26) is shaped as a V oriented so that its two sides are slightly open during pivoting in the two directions of the tilting piece (10) about its rearward pivoting axis (15).

10. Rearview mirror according to claim 6, characterized in that a stop element forming part of the base (1) is capable of cooperating with a stop of the tilting piece (10) in order to define the position of the casing (4) for parking.

11. Rearview mirror according to claim 10, characterized in that the stop is a finger (36) projecting laterally on the locking lever (26) near the tooth (28) and the stop element is a tab (35) of the cam (29) projecting near the notch (33) for locking in parking position.

12. Rearview mirror according to claims 4 and 6, characterized in that the forward pivoting half-bearing or bearings (14), the locking cam (29) and the fixed part (17) of the rearward pivoting member of the tilting piece (10) form part of a reinforcement (37) added and fixed on the base (1), the cam (29) and the locking lever (26) passing through an opening (10a) in said tilting piece (10).
